# EUROPEAN PATENT SPECIFICATION

(11) **EP 3 795 426 B1**
(45) Date of publication and mention of the grant of the patent: **29.12.2021**
(21) Application number: 20182799.5
(22) Date of filing: 29.06.2020
(51) Int. Cl.: B60R 11/04, B60Q 1/26

(54) **SYSTEM FOR FASTENING AND TILTING IMAGE CAPTURING DEVICES TO LIGHTING DEVICES OF PRIORITY VEHICLES**
SYSTEM ZUM BEFESTIGEN UND NEIGEN VON BILDERFASSUNGSVORRICHTUNGEN AN BELEUCHTUNGSVORRICHTUNGEN VON PRIORITÄTSFAHRZEUGEN
SYSTÈME DE FIXATION ET D'INCLINAISON DE DISPOSITIFS DE CAPTURE D'IMAGES SUR DES DISPOSITIFS D'ÉCLAIRAGE DE VÉHICULES PRIORITAIRES

(30) Priority: 19.09.2019 ES 201930812
(43) Date of publication of application: 24.03.2021
(73) Proprietor: Federal Signal Vama, S.A.U., 08339 Vilassar de Dalt (Barcelona) (ES)
(72) Inventor: JOSÉ MUÑÓZ, Juan, 08339 VILASSAR DE DALT (Barcelona) (ES)
(74) Representative: Ungria López, Javier

(56) References cited:
- GB-A- 2 442 269
- GB-A- 2 553 298
- US-A- 4 063 258

## Description

### Object of the invention

The object of the invention is a system for fastening and tilting image capturing devices to lighting devices of priority vehicles. Priority vehicles carry on the roofs thereof lighting devices which not only incorporate emergency or priority lights, but also have image capturing devices such as video cameras and cameras for reading number plates of vehicles the tilt of which, in order to obtain a correct viewing angle, depends on the height of the priority vehicle. The system of the present invention enables selecting the tilt of the image capturing devices such as cameras for reading number plates of vehicles (known as "Automatic License Plate Recognition" or simply "ALPR") or any other type of cameras and video cameras depending on the height of the priority vehicle.

Therefore, it is intended to provide a system that not only fastens the image capturing devices to the lighting device, but rather that the same fastening system further enables the tilting of the image capturing devices in a reduced size, such as being able to locate the capture of images on the perimeter of a lighting device without interfering with the functionality of the rest of the elements of the lighting device such as: emergency lights, priority lights, signal lights, illuminating lights, sirens, etc.

### Technical Field of the Invention

The technical field to which the present invention belongs is the field of fastening and tilting systems specially adapted to lighting devices of priority and emergency vehicles such as police cars, ambulances, fire trucks, etc.

### Background of the invention

GB 2 442 269 A discloses a system for tilting image capturing devices according to the preamble of claim 1, and a lightning device according to claim 8.

Currently, lighting devices for emergency vehicles have several functions that go beyond the warning function of emergency or priority lights. Additional functions that lighting devices must have are the functions of capturing the environment of the priority vehicle and the recognition of number plates of the vehicles close to the priority vehicle. These functionalities entail including image capturing devices such as video cameras and cameras for reading number plates on the perimeter of the lighting device in such a manner that it does not affect the other functionalities (priority lights, emergency lights, panels that display messages, sirens, etc.). Furthermore, the image capturing devices must be able to be properly oriented according to the height of the priority vehicle in order to have the correct tilting angle.

The solution of the state of the art is tilting the entire lighting device according to the need of the imaging capture device. This has the disadvantage that it can render the rest of the functionalities incompatible to the point of rendering them useless.

It would be desirable, therefore, to find a solution to the problem of the state of the art wherein each image capturing device such as video cameras and cameras for reading number plates can be adjusted independently without affecting the functionality of the rest of the lighting device.

### Description of the Invention

A first aspect of the present invention discloses a system for fastening and tilting image capturing devices to lighting devices of priority vehicles.

A first embodiment of the present invention discloses a system for fastening and tilting image capturing devices to lighting devices of priority vehicles comprising:
- an adjusting screw;
- an intermediate support which in turn comprises an internally-threaded adjusting support;
- a perimeter adapter with a stepped shape joining one end of the intermediate support to a lighting device;
- fastening means which fasten the perimeter adapter and the end of the intermediate support to the lighting device;
- a tilting plate fastened to an image capturing device;
wherein the tilting plate additionally comprises:
- pivoting means tipping on slits comprised on the other end of the intermediate support; and,
- a protrusion joined to the head of the adjusting screw, which is configured to tilt the image capturing device at a predetermined angle by means of the threading of the adjusting screw on the adjusting support.

In another embodiment of the present invention, the perimeter adapter may comprise a seat for receiving the end of the intermediate support.

In another embodiment of the present invention, the intermediate support is U-shaped. Additionally, the intermediate support may comprise a flat portion, the ends of which are projected perpendicular to the flat portion and parallel to each other, two rectangular projections, at the end of which the slits are arranged. Additionally, the adjusting support can be located on one of the rectangular projections of the intermediate support.

In another embodiment of the present invention, the system for fastening and tilting image capturing devices to lighting devices of priority vehicles may comprise an additional second tilting plate, such that each of the fastening plates is fastened to one side of the image capturing device and wherein each of the tilting plates comprises lugs as pivoting means.

In another embodiment of the present invention, the tilting plate is fastened to the rear portion of the video camera and the pivoting means are two screws, each of which is fastened to the side of the image capturing device.

In another embodiment of the present invention, the perimeter adapter comprises threaded flanges configured so that a protective casing can be fastened by means of screws to the perimeter adapter.

For any of the above embodiments, the image capturing device may be a video camera or camera for reading number plates.

A second aspect of the invention discloses a lighting device of priority vehicles comprising the system for fastening and tilting image capturing devices to lighting devices of priority vehicles of the first aspect of the invention according to any one of the previously-defined embodiments thereof. The lighting device comprises a perimeter profile whereon the fastening and tilting system for image capturing devices is fastened to lighting devices of priority vehicles.

In an embodiment of the second aspect of the present invention, the lighting device of priority vehicles may additionally comprise an image capturing device, selected from among a video camera, a camera for reading number plates, and combinations of both.

### Brief description of the Figures

Figure 1 shows a lighting device for priority vehicles with four video cameras as image capturing devices, wherein each video camera is fastened to the device by means of the fastening and tilting system of the present invention.
Figure 2 shows a lighting device for priority vehicles with the lighting panel folded with cameras for reading number plates and video cameras as image capturing devices, located on the longer sides of the device, with the video cameras and cameras for reading number plates fastened to the lighting device by means of the fastening and tilting system of the present invention.
Figure 3 shows a lighting device for priority vehicles with the lighting panel unfolded with cameras for reading number plates and video cameras as image capturing devices, located on the longer sides of the device, with the video cameras and cameras for reading number plates fastened to the lighting device by means of the fastening and tilting system of the present invention.
Figure 4 shows an exploded view of the perimeter of the lighting device wherein a video camera is located as an image capturing device, which is fastened to the lighting device by means of the fastening and tilting system of the present invention.
Figure 5 shows an exploded view of the perimeter of the lighting device wherein a camera for reading number plates is located as an image capturing device, which is fastened to the lighting device by means of the fastening and tilting system of the present invention.

### Description of an embodiment

### Reference list

- 1.: Lighting device;
- 2.: Lighting panel;
- 3.: Emergency lights;
- 4.: Video camera;
- 5.: Camera for reading number plates;
- 6.: Protective casing; 6a. Fixed portion of the casing; 6b. Removable portion of the casing;
- 7.: Connector;
- 8.: Perimeter profile of the device 1;
- 9.: Perimeter adapter;
- 10.: Seat of the perimeter adapter 9;
- 11.: Intermediate support (11a. Flat portion, 11b. Rectangular projection, 11c. Slits);
- 12.: Adjusting screw;
- 13.: Adjusting support;
- 14.: Tilting plate of the video camera 4, 14a. Threaded lug;
- 15.: Not used;
- 16.: Screws for fastening the perimeter profile;
- 17.: Screws for fastening the protective casing;
- 18.: Screws for fastening the camera for reading number plates 5;
- 19.: Tilting plate for the camera for reading number plates 5; 19a. Protrusion.

The embodiments of the invention in relation to the figures are described below.

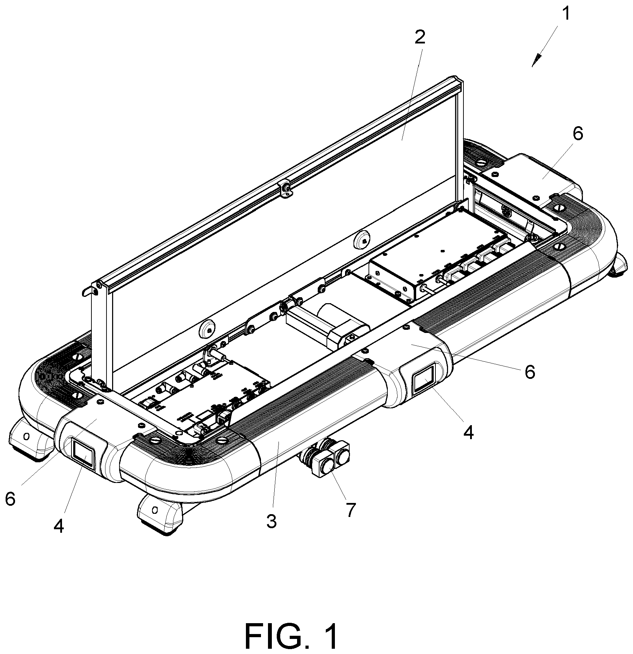

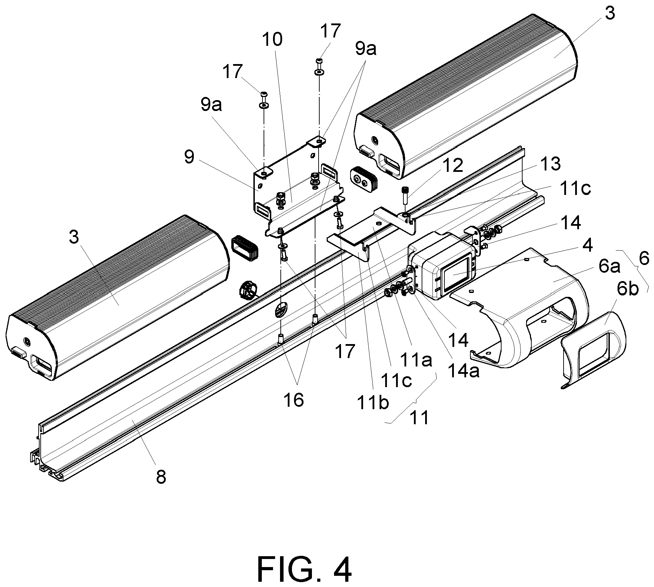

Figure 1 shows a lighting device for priority vehicles 1 with four video cameras 4 as image capturing devices. The video cameras 4 are hidden inside the protective casings 6. There are two video cameras 4 centred on each longer side of the lighting device 1, and two video cameras 4 centred on the shorter side of the lighting device 1. The lighting device 1 has the lighting panel 2 in the unfolded position, which hides the protective casing 6 of a longer side of the lighting device 1. The system for fastening and tilting image capturing devices to lighting devices of priority vehicles of the present invention is located inside the protective casing 6, as described below for figure 4.

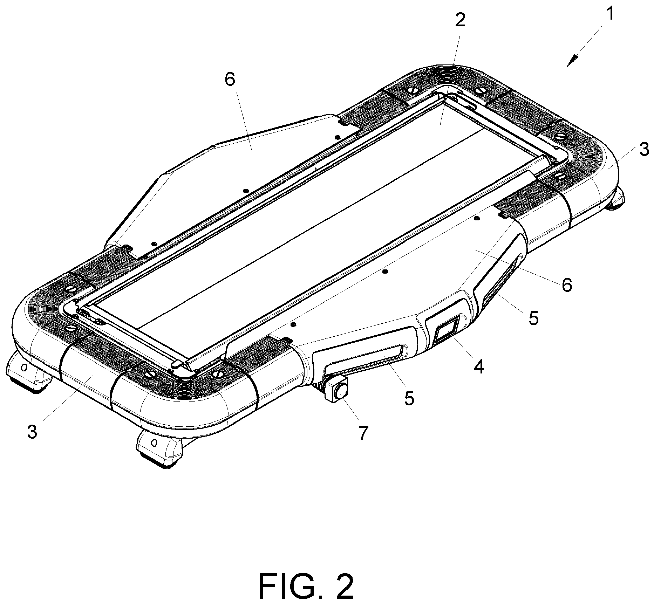

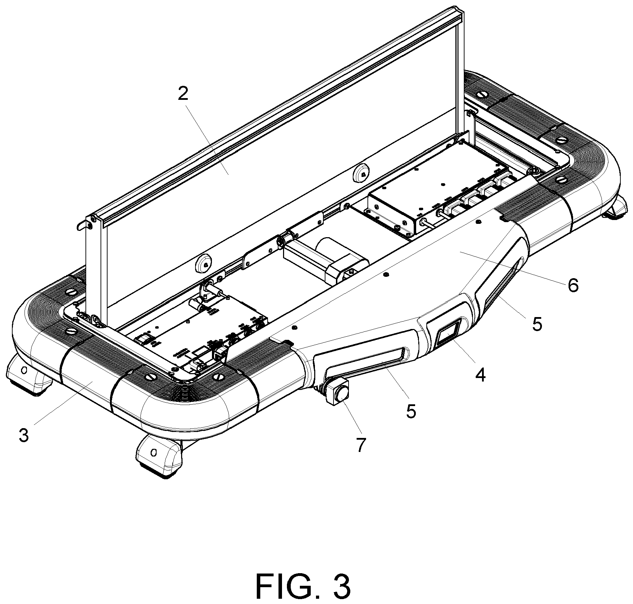

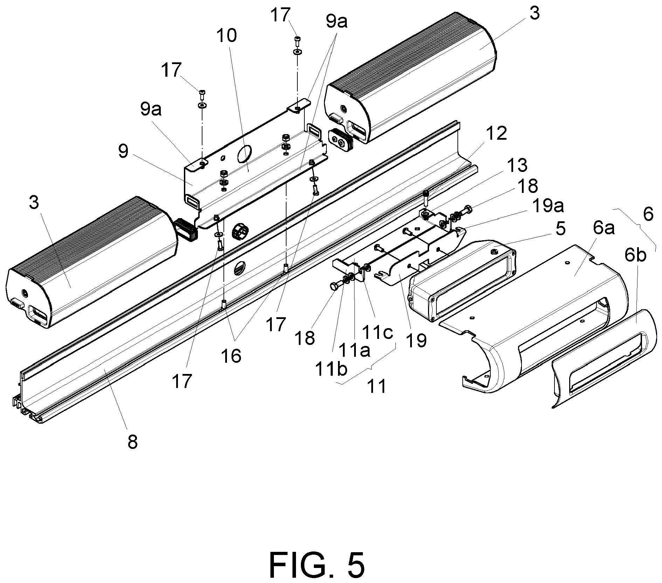

Figure 2 shows a lighting device 1 for priority vehicles with two cameras for reading number plates 5 and a video camera 4 which are located on each of the longer sides of the lighting device 1, the lighting panel 2 being in the folded position. The system for fastening and tilting video cameras to lighting devices of priority vehicles of the present invention is located inside the protective casing 6, as described below for figures 4 and 5. Figure 3 corresponds to figure 2, but the lighting panel 2 is unfolded.

As seen in figures 1 to 3, the lighting device 1 comprises the lighting panel 2 in the central portion of the lighting device 1, a perimeter edge wherein the emergency lights 3 are located as well as the connector 7 which enables the image capturing devices such as video cameras 4 and cameras for reading number plates 5 to be connected to the priority vehicle with interposition of the lighting device 1. Regarding the shape of the lighting device 1, the lighting device 1 to which the present invention is directed has a rectangular shape with a low height in relation to the width of the longer or shorter sides of the lighting device 1. The low height of the lighting device 1 hinders the fastening of the video cameras 4 and the cameras for reading number plates 5 to the lighting device 1 and also hinders the tilting of the video cameras 4 and the cameras for reading number plates 5. However, the aforementioned difficulty is overcome with the fastening and tilting system of the present invention and which is shown in figures 4 and 5.

Figure 4 shows the fastening and tilting system of the present invention for the video camera 4 which is characterised in that said video camera 4 has two off-centre holes in the side portions thereof as fastening means. The lighting device 1 comprises the perimeter profile 8 to which the fastening and tilting system of the present invention is fastened in the following manner. The fastening and tilting system comprises the perimeter adapter 9 with a stepped shape, which has the seat 10 for receiving one end of the intermediate support 11. The perimeter profile 8 has screws 16 which fasten both the perimeter adapter 9 and the intermediate support 11, thereby saving space. The intermediate support 11 is U-shaped, formed by a flat portion 11a, the ends of which are projected perpendicular to the flat portion and parallel to each other, two rectangular projections 11b, at the end of which corresponding slits 11c are arranged. One of the rectangular projections 11b has an internally-threaded adjusting support 13 for receiving the adjusting screw 12. The threaded lugs 14a of the tilting plates 14 fastened laterally to the video camera 4 are introduced on the slits 11c. The threaded lugs 14a press on the slits 15 by means of nuts. One of the tilting plates 14 has a protrusion (not shown) which is fastened to the head of the adjusting screw 12. In this manner, the threaded lugs 14a enable the free rotation of the video camera 4 so that the video camera 4 can have any tilt, but said free rotation is limited by the adjusting screw 12 which maintains the video camera 4 in the desired tilt. Additionally, the perimeter adapter 9 has threaded flanges 9a so that the fastened portion 6a of the protective casing 6 can be fastened by means of screws 17. The protective casing 6, in addition to the fastened portion 6a, has a removable portion 6b secured by pressure against the fastened portion 6a, and which enables easy access to the video camera 4 for the adjustment thereof.

Figure 5 shows the fastening and tilting system of the present invention for the camera for reading number plates. The fastening and tilting system for the camera for reading number plates 5 varies very little from the fastening and tilting system of the video camera 4. The only difference is that the video camera 4 has two off-centre side fastening points while the camera for reading number plates has a single centred side point, as well as fastening points on the rear portion.

Returning to figure 5, which shows the fastening and tilting system of the present invention for the camera for reading number plates 5, the lighting device 1 comprises the perimeter profile 8 to which the fastening and tilting system of the present invention is fastened in the following manner. The fastening and tilting system comprises the perimeter adapter 9 with a stepped shape, which has the seat 10 for receiving one end of the intermediate support 11. The perimeter profile 8 has screws 16 which fasten both the perimeter adapter 9 and the intermediate support 11, thereby saving space. The intermediate support 11 is U-shaped, formed by a flat portion 11a, the ends of which are projected perpendicular to the flat portion and parallel to each other, two rectangular projections 11b, at the end of which corresponding slits 11c are arranged. One of the rectangular projections 11b has an internally-threaded adjusting support 13 for receiving the adjusting screw 12. The fastening screws 18 are introduced on the slits 11c, which are screwed laterally to the camera for reading number plates for the fastening thereof. In order to be able to select the tilt of the camera for reading number plates 5, the tilting plate 19 is fastened to the rear portion of the camera for reading number plates 5. The tilting plate 19 has a protrusion 19a which is fastened to the head of the adjusting screw 12. In this manner, the fastening screws 18 enable the free rotation of the camera for reading number plates 5 so that the camera for reading number plates 5 can have any tilt, but said free rotation is limited by the adjusting screw 12 which maintains the camera for reading number plates 5 at the desired tilt. Additionally, the perimeter adapter 9 has threaded flanges 9a so that the fastened portion 6a of the protective casing 6 can be fastened by means of screws 17. The protective casing 6, in addition to the fastened portion 6a, has a removable portion 6b secured by pressure against the fastened portion 6a, and which enables easy access to the camera for reading number plates for the adjustment thereof.

Therefore, the system for fastening and tilting image capturing devices shown in figure 4 is suitable for any image capturing device that has two holes, which can be threaded, as fastening means, on each of the side portions thereof. While the system for fastening and tilting image capturing devices shown in figure 5 is suitable for any image capturing device which has a centred hole, which can be threaded, as fastening means, on each side portion of the image capturing device and one or more holes (threaded or not) on the rear portion of the image capturing device.

## Claims

1. A system for fastening and tilting image capturing devices to lighting devices of priority vehicles, **characterised in that** it comprises:
- an adjusting screw (12);
- an intermediate support (11) which in turn comprises an internally-threaded adjusting support (13);
- a perimeter adapter (9) with a stepped shape joining one end of the intermediate support (11) to a lighting device (1);
- fastening means (16) which fasten the perimeter adapter (9) and the end of the intermediate support (11) to the lighting device (1);
- a tilting plate (14) fastened to an image capturing device (4,5);
wherein the tilting plate (14,19) additionally comprises:
- pivoting means (14a, 18) tipping on slits (11c) comprised on the other end of the intermediate support (11); and,
- a protrusion (19a) joined to the head of the adjusting screw (12), which is configured to tilt the image capturing device (4,5) at a predetermined angle by means of the threading of the adjusting screw (12) on the adjusting support (13).

2. The system for fastening and tilting image capturing devices to lighting devices of priority vehicles, according to claim 1, wherein the perimeter adapter (9) comprises a seat (10) for receiving the end of the intermediate support (11).

3. The system for fastening and tilting image capturing devices to lighting devices of priority vehicles, according to claim 1, wherein the intermediate support (11) is U-shaped, and wherein the intermediate support (11) comprises a flat portion (11a) from the ends of which two rectangular projections (11b) project perpendicular to the flat portion and parallel to each other, at the end of which the slits (11c) are arranged.

4. The system for fastening and tilting image capturing devices to lighting devices of priority vehicles, according to claim 3, wherein the adjusting support (13) is located in one of the rectangular projections (11b) of the intermediate support (11).

5. The system for fastening and tilting image capturing devices to lighting devices of priority vehicles, according to claim 1, wherein it comprises an additional tilting plate (14), such that each of the fastening plates (14) is fastened to one side of the image capturing device (4) and wherein each of the tilting plates comprises lugs (14a) as pivoting means.

6. The system for fastening and tilting image capturing devices to lighting devices of priority vehicles, according to claim 1, wherein the tilting plate (14) is fastened to the rear portion of the image capturing device (5) and the pivoting means are two screws (18), each of which is fastened to the side of the image capturing device (5).

7. The system for fastening and tilting image capturing devices to lighting devices of priority vehicles, according to claim 1, wherein the perimeter adapter (9) comprises threaded flanges (9a) configured so that a protective casing (6) can be fastened by means of screws (17) to the perimeter adapter (9).

8. A lighting device (1) of priority vehicles, wherein it comprises the system for fastening and tilting image capturing devices to lighting devices of priority vehicles according to any one of claims 1 to 7.

9. The lighting device (1) of priority vehicles, according to claim 8, wherein it comprises a perimeter profile (8) whereon the system for fastening and tilting image capturing devices to lighting devices of priority vehicles is fastened.

10. The lighting device (1) of priority vehicles, according to claim 8, wherein it additionally comprises an image capturing device (4,5).

11. The lighting device (1) of priority vehicles, according to claim 10, wherein the image capturing device is selected from among a video camera (4), a camera for reading number plates (5) and combinations thereof.

## Patentansprüche

1. System zum Befestigen und Neigen von Bildaufnahmevorrichtungen an Leuchtvorrichtungen von Einsatzfahrzeugen, **dadurch gekennzeichnet, dass** es umfasst:
- eine Einstellschraube (12);
- einen Zwischenträger (11), der seinerseits einen mit Innengewinde versehenen Einstellträger (13) umfasst;
- einen Außenrand-Adapter (9) mit einer abgestuften Form, der ein Ende des Zwischenträgers (11) mit einer Leuchtvorrichtung (1) verbindet;
- Befestigungseinrichtungen (16), die den Außenrand-Adapter (9) und das Ende des Zwischenträgers (11) an der Leuchtvorrichtung (1) befestigen;
- eine Neigeplatte (14), die an einer Bildaufnahmevorrichtung (4, 5) befestigt ist;
wobei die Neigeplatte (14, 19) zusätzlich umfasst:
- Schwenkeinrichtungen (14a, 18), die an Schlitzen (11c) schwenkbar gelagert sind, die sich an dem anderen Ende des Zwischenträgers (11) befinden; und,
- einen Vorsprung (19a), der mit dem Kopf der Einstellschraube (12) verbunden und so ausgeführt ist, dass er die Bildaufnahmevorrichtung (4, 5) mittels des Gewindes der Einstellschraube (12) an dem Einstellträger (13) in einem vorgegebenen Winkel neigt.

2. System zum Befestigen und Neigen von Bildaufnahmevorrichtungen an Leuchtvorrichtungen von Einsatzfahrzeugen nach Anspruch 1, wobei der Außenrand-Adapter (9) einen Sitz (10) zum Aufnehmen des Endes des Zwischenträgers (11) umfasst.

3. System zum Befestigen und Neigen von Bildaufnahmevorrichtungen an Leuchtvorrichtungen von Einsatzfahrzeugen nach Anspruch 1, wobei der Zwischenträger (11) U-förmig ist und der Zwischenträger (11) einen flachen Abschnitt (11a) aufweist, von dessen Enden zwei rechtwinklige Vorsprünge (11b) senkrecht zu dem flachen Abschnitt und parallel zueinander vorstehen, an deren Ende die Schlitze (11c) angeordnet sind.

4. System zum Befestigen und Neigen von Bildaufnahmevorrichtungen an Leuchtvorrichtungen von Einsatzfahrzeugen nach Anspruch 3, wobei der Einstellträger (13) sich an einem der rechteckigen Vorsprünge (11b) des Zwischenträgers (11) befindet.

5. System zum Befestigen und Neigen von Bildaufnahmevorrichtungen an Leuchtvorrichtungen von Einsatzfahrzeugen nach Anspruch 1, wobei es eine zusätzliche Neigeplatte (14) umfasst, so dass jede der Befestigungsplatten (14) an einer Seite der Bildaufnahmevorrichtung (4) befestigt ist und wobei jede der Neigeplatten Zapfen (14a) als Schwenkeinrichtungen umfasst.

6. System zum Befestigen und Neigen von Bildaufnahmevorrichtungen an Leuchtvorrichtungen von Einsatzfahrzeugen nach Anspruch 1, wobei die Neigeplatte (14) an dem hinteren Abschnitt der Bildaufnahmevorrichtung (5) befestigt ist und die Schwenkeinrichtungen zwei Schrauben (18) sind, von denen jede an der Seite der Bildaufnahmevorrichtung (5) befestigt ist.

7. System zum Befestigen und Neigen von Bildaufnahmevorrichtungen an Leuchtvorrichtungen von Einsatzfahrzeugen nach Anspruch 1, wobei der Außenrand-Adapter (9) Gewindeflansche (9a) umfasst, die so ausgeführt sind, dass eine Schutzverkleidung (6) mittels Schrauben (17) an dem Außenrand-Adapter (9) befestigt werden kann.

8. Leuchtvorrichtung (1) von Einsatzfahrzeugen, wobei sie das System zum Befestigen und Neigen von Bildaufnahmevorrichtungen an Leuchtvorrichtungen von Einsatzfahrzeugen nach einem der Ansprüche 1 bis 7 umfasst.

9. Leuchtvorrichtung (1) von Einsatzfahrzeugen nach Anspruch 8, wobei sie ein Außenrand-Profil (8) umfasst, an dem das System zum Befestigen und Neigen von Bildaufnahmevorrichtungen an Leuchtvorrichtungen von Einsatzfahrzeugen befestigt ist.

10. Leuchtvorrichtung (1) von Einsatzfahrzeugen nach Anspruch 8, wobei sie zusätzlich eine Bildaufnahmevorrichtung (4, 5) umfasst.

11. Leuchtvorrichtung (1) von Einsatzfahrzeugen nach Anspruch 10, wobei die Bildaufnahmevorrichtung aus einer Videokamera (4), einer Kamera zum Lesen von Nummernschildern (5) und Kombinationen daraus ausgewählt wird.

## Revendications

1. Système de fixation et d'inclinaison de dispositifs de capture d'images sur des dispositifs d'éclairage de véhicules prioritaires, **caractérisé en ce qu'**il comprend :
- une vis de réglage (12) ;
- un support intermédiaire (11) qui comprend à son tour un support de réglage à filetages internes (13) ;
- un adaptateur de périmètre (9) à forme échelonnée qui joint une extrémité du support intermédiaire (11) à un dispositif d'éclairage (1) ;
- des moyens de fixation (16) qui fixent l'adaptateur de périmètre (9) et l'extrémité du support intermédiaire (11) sur le dispositif d'éclairage (1) ;
- une plaque d'inclinaison (14) fixée sur un dispositif de capture d'images (4, 5) ;
dans lequel la plaque d'inclinaison (14, 19) comprend en outre :
- des moyens de pivotement (14a, 18) qui basculent sur des fentes (11c) comprises sur l'autre extrémité du support intermédiaire (11) ; et
- une saillie (19a) jointe à la tête de la vis de réglage (12), qui est configurée pour incliner le dispositif de capture d'images (4, 5) à un angle prédéterminé à l'aide des filetages de la vis de réglage (12) sur le support de réglage (13).

2. Système de fixation et d'inclinaison de dispositifs de capture d'images sur des dispositifs d'éclairage de véhicules prioritaires selon la revendication 1, dans lequel l'adaptateur de périmètre (9) comprend un siège (10) destiné à recevoir l'extrémité du support intermédiaire (11).

3. Système de fixation et d'inclinaison de dispositifs de capture d'images sur des dispositifs d'éclairage de véhicules prioritaires selon la revendication 1, dans lequel le support intermédiaire (11) est en forme de U, et dans lequel le support intermédiaire (11) comprend une partie plate (11a) depuis les extrémités de laquelle deux saillies rectangulaires (11b) se projettent perpendiculairement à la partie plate et parallèlement l'une à l'autre, et à l'extrémité de laquelle les fentes (11c) sont disposées.

4. Système de fixation et d'inclinaison de dispositifs de capture d'images sur des dispositifs d'éclairage de véhicules prioritaires selon la revendication 3, dans lequel le support de réglage (13) se trouve dans l'une des saillies rectangulaires (11b) du support intermédiaire (11).

5. Système de fixation et d'inclinaison de dispositifs de capture d'images sur des dispositifs d'éclairage de véhicules prioritaires selon la revendication 1, dans lequel il comprend une plaque d'inclinaison supplémentaire (14), de sorte que chacune des plaques de fixation (14) soit fixée sur un côté du dispositif de capture d'images (4), et dans lequel chacune des plaques d'inclinaison comprend des ergots (14a) en guise de moyens de pivotement.

6. Système de fixation et d'inclinaison de dispositifs de capture d'images sur des dispositifs d'éclairage de véhicules prioritaires selon la revendication 1, dans lequel la plaque d'inclinaison (14) est fixée sur la partie arrière du dispositif de capture d'images (5) et les moyens de pivotement sont deux vis (18), qui sont chacune fixées sur le côté du dispositif de capture d'images (5).

7. Système de fixation et d'inclinaison de dispositifs de capture d'images sur des dispositifs d'éclairage de véhicules prioritaires selon la revendication 1, dans lequel l'adaptateur de périmètre (9) comprend des brides filetées (9a) configurées de sorte qu'un boîtier de protection (6) puisse être fixé à l'aide de vis (17) sur l'adaptateur de périmètre (9).

8. Dispositif d'éclairage (1) de véhicules prioritaires, dans lequel il comprend le système de fixation et d'inclinaison de dispositifs de capture d'images sur des dispositifs d'éclairage de véhicules prioritaires selon l'une quelconque des revendications 1 à 7.

9. Dispositif d'éclairage (1) de véhicules prioritaires selon la revendication 8, dans lequel il comprend un profilé de périmètre (8) sur lequel le système de fixation et d'inclinaison de dispositifs de capture d'images sur des dispositifs d'éclairage de véhicules prioritaires est fixé.

10. Dispositif d'éclairage (1) de véhicules prioritaires selon la revendication 8, dans lequel il comprend en outre un dispositif de capture d'images (4, 5).

11. Dispositif d'éclairage (1) de véhicules prioritaires selon la revendication 10, dans lequel le dispositif de capture d'images est choisi parmi une caméra vidéo (4), une caméra de lecture de plaques d'immatriculation (5) et des combinaisons de celles-ci.
